# EUROPEAN PATENT SPECIFICATION

(11) **EP 1 341 196 B1**
(45) Date of publication and mention of the grant of the patent: **04.04.2007**
(21) Application number: 03003188.4
(22) Date of filing: 19.02.2003
(51) Int. Cl.: H01G 9/20

(54) **Electrolytic composition, photoelectric conversion device and photoelectric cell**
Elektrolytzusammensetzung, Vorrichtung zur photoelektrischen Umwandlung und photoelektrische Zelle
Composition électrolytique, dispositif pour la conversion photoélectrique et cellule photoélectrique

(30) Priority: 27.02.2002 JP 2002052147
(43) Date of publication of application: 03.09.2003
(73) Proprietor: FUJIFILM Corporation, Minato-ku Tokyo (JP)
(72) Inventor: Ono, Michio, Fuji Photo Film Co., Ltd., Kanagawa-ken (JP)
(74) Representative: Solf, Alexander

(56) References cited:
- PAPAGEORGIOU N ET AL: "The Performance and Stability of Ambient Temperature Molten Salts for Solar Cell Applications" JOURNAL OF THE ELECTROCHEMICAL SOCIETY, ELECTROCHEMICAL SOCIETY. MANCHESTER, NEW HAMPSHIRE, US, vol. 143, no. 10, October 1996 (1996-10), pages 3099-3108, XP002118482 ISSN: 0013-4651
- STATHATOS E ET AL: "DYE-SENSITIZED PHOTOELECTROCHEMICAL CELL USING A NANOCOMPOSITE SIO2/POLY(ETHYLENE GLYCOL) THIN FILM AS ELECTROLYTE SUPPORT. CHARACTERIZATION BY TIME-RESOLVED LUMINESCENCE AND CONDUCTIVITY MEASUREMENTS" JOURNAL OF PHYSICAL CHEMISTRY. B, MATERIALS, SURFACES, INTERFACES AND BIOPHYSICAL, WASHINGTON, DC, US, vol. 105, 2001, pages 3486-3492, XP001011482 ISSN: 1089-5647
- KUBO W ET AL: "QUASI-SOLID-STATE DYE-SENSIZITED SOLAR CELLS USING ROOM TEMPERATURE MOLTEN SALTS AND A LOW MOLECULAR WEIGHT GELATOR" CHEMICAL COMMUNICATIONS - CHEMCOM, ROYAL SOCIETY OF CHEMISTRY, GB, vol. 4, 21 February 2002 (2002-02-21), pages 374-375, XP001172440 ISSN: 1359-7345
- KONNO A ET AL: "EFFECT OF IMIDAZOLIUM SALTS ON THE PERFORMANCE OF SOLID-STATE DYE-SENSITIZED PHOTOVOLTAIC CELL USING COPPER IODIDE AS A HOLE COLLECTOR" ELECTROCHEMISTRY, ELECTROCHEMISTRY SOCIETY OF JAPAN, TOKYO, JP, vol. 70, no. 6, June 2002 (2002-06), pages 432-434, XP008023568

## Description

### FIELD OF THE INVENTION

The present invention relates to an electrolytic composition excellent in charge transportation and durability, a photoelectric conversion device comprising such an electrolytic composition for exhibiting excellent photoelectric conversion, and a photoelectric cell comprising such a photoelectric conversion device.

### BACKGROUND OF THE INVENTION

Photoelectric conversion devices are used for various kinds of optical sensors, copiers, photoelectric generators, etc. Put into practical use are various types of photoelectric conversion devices, such as those using metals, semiconductors, organic pigments or dyes, or combinations thereof.

U.S. Patents 4,927,721, 4,684,537, 5,084,365, 5,350,644, 5,463,057 and 5,525,440, WO 98/50393, JP 7-249790 A and JP 10-504521 A disclose photoelectric conversion devices utilizing fine semiconductor particles sensitized by dyes, and materials and methods for producing such photoelectric conversion devices. A photoelectric conversion device comprising fine semiconductor particles sensitized by a dye is referred to as a dye-sensitized photoelectric conversion device hereinafter. The dye-sensitized photoelectric conversion device is advantageous because it can be produced at relatively low costs using an inexpensive metal such as titanium dioxide without high purification. However, the conventional, dye-sensitized photoelectric conversion devices do not necessarily have sufficiently high durability. It is thus highly desired to develop a dye-sensitized photoelectric conversion device exhibiting improved durability.

For instance, a photoelectric conversion device described in U.S. Patent 4,927,721 comprises a charge-transporting layer containing an electrolytic liquid of redox couples dissolved in water or an organic solvent, exhibiting high photoelectric conversion efficiency. However, in a photoelectric conversion device comprising such electrolytic liquid, the electrolytic liquid is evaporated or depleted by use for a long period of time, resulting in extreme decrease in the photoelectric conversion efficiency and in some cases failure to work as a device.

Under these circumstances, WO 93/20565 discloses a photoelectric conversion device comprising a solid electrolyte. Further, Nippon Kagaku Kaishi (the Japanese Journal of Chemistry), 7, 484 (1997), JP 7-288142 A, "Solid State Ionics," 89, 263 (1986), and JP 9-27352 A propose a photoelectric conversion device using a solid electrolyte comprising a high-molecular, cross-linked polyethylene oxide. However, the devices using the solid electrolytes are insufficient in photoelectric conversion characteristics, especially in short-circuiting current density and durability.

WO 95/18456 discloses a method using a particular imidazolium salt as an electrolyte to prevent the depletion of an electrolytic composition and to improve the durability of a photoelectric conversion device. This imidazolium salt is in a state of a molten salt at room temperature, which is referred to as "molten-at-room-temperature salt." In this method, solvents such as water or organic solvents for dissolving the electrolytic compositions are needed in little amounts, if necessary, whereby the electrolytic composition exhibit improved durability. However, because an electrolytic composition containing a molten-at-room-temperature salt has flowability, liquid leakage is likely to occur.

To prevent the above liquid leakage, a proposal has been made to provide a method for gelating an electrolytic composition to remove flowability. Known as gelation methods are, for instance, a method of adding an oil-gelling agent as described in JP 2000-58140 A; a method of copolymerizing a monomer having a nucleophic group and a monomer having an electrolyphic group as described in JP 2000-322932 A; a method of adding a polymer as described in "Polymer Electrolyte Reviews-1 and 2," edited by J. R. MacCallum and C. A. Vincent, ELSEIVER APPLIED SCIENCE; a method of reacting a polymer having a reactive group with a cross-linking agent as described in JP 2000-86724 A, JP 2001-35550 A, JP 2001-160427 A and JP 2000-228234 A, etc. However, the liquid retention, mechanical strength and charge transportation of these electrolytic gel compositions depend on the amount of a gelating agent. When the amount of the gelating agent increases to improve the liquid retention and the mechanical strength, the charge transportation decreases, resulting in decrease in the photoelectric conversion efficiency of the photoelectric conversion device.

Chemical Communications, Vol. 4, pp. 374-375 (February 21, 2002) (D1) discloses a dye-sensitized solar cell fabricated using the toom temperature molten salt, 1- hexyl-3-methylimidazolium iodide, iodine and a low molecular weight gelator (Scheme 1b, see page 374, right column, line 5) as a quasi-solid-state eletrolyte, which does not teach or suggest the use of fine, inorganic particles as a viscosity-increasing agent.

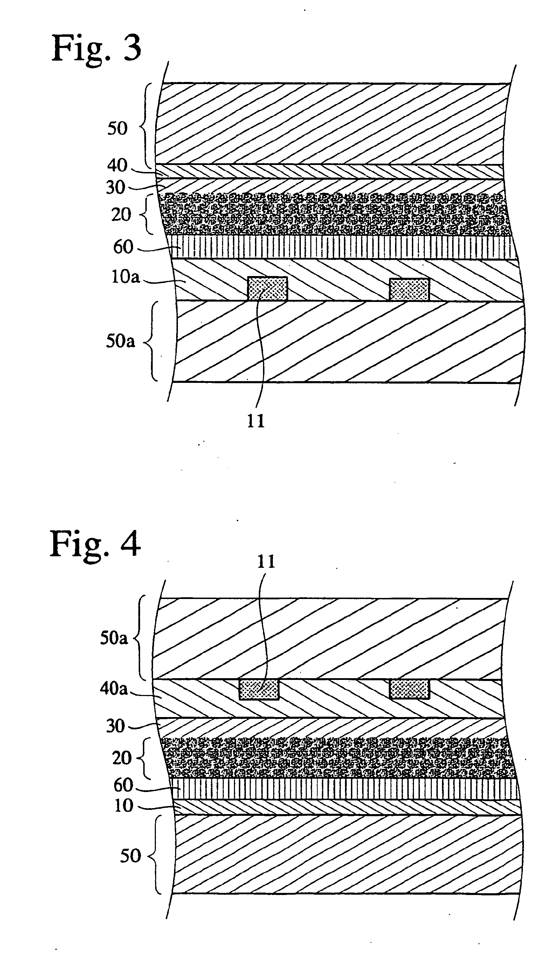

The Journal of the Electrochemical Society, Vol. 143, pp. 3486-3492 (October 10, 1996) (D2) discusses about the viscosity of an admixed electrolyte of MHImI (methyl-hexyl-imidazolium iodide) and MbuImoTf (1-butyl-3-methyl-imidazolium triflate) (see Fig. 3 at page 3102), which does not teach or suggest the use of fine, inorganic particles as a viscosity-increasing agent.

The Journal of Physical Chemistry, B 2001, Vol. 105, pp. 3486-3492 (D3) discloses a SiO₂/poly(ethylene glycol)-200 film containing electrolyte, but does not teach or suggest a composition comprising fine, inorganic particles as a viscosity-increasing agent and a molten-at-room-temperature salt of the present invention. Particularly, the SiO₂/poly(ethylene glycol)-200 film containing electrolyte is a film, which does not teach a molten salt in a state of liquid at room temperature.

The present invention produces such an effect that the viscosity of a molten-at-room-temperature salt is increased by the use of specified fine, inorganic particles. Thus, the molten-at-room-temperature salt in the present invention should be in a state of liquid at room temperature.

### OBJECTS OF THE INVENTION

An object of the present invention is to provide an electrolytic composition excellent in charge transportation.

Another object of the present invention is to provide a photoelectric conversion device comprising such an electrolytic composition for exhibiting excellent photoelectric conversion efficiency and durability.

Another object of the present invention is to provide a photoelectric cell comprising such a photoelectric conversion device.

### SUMMARY OF THE INVENTION

As a result of intense research in view of the above objects, the inventor has found that an electrolytic composition comprising fine, inorganic particles having particular particle diameters and a molten-at-room-temperature salt is excellent in charge transportability (ion transportability) and durability. The present invention, which has been accomplished by this finding, provides an electrolytic gel composition defined by claim 1.

Thus, the electrolytic composition of the present invention comprises a molten-at-room-temperature salt, and fine, inorganic particles whose primary particles have an average particle diameter of 1 nm to 300 nm.

The fine, inorganic particles are an oxide. The molten-at-room-temperature salt preferably comprises an iodine salt, the amount of the molten-at-room-temperature salt is preferably 60% by mass or more based on the entire electrolytic composition. The electrolytic composition of the present invention preferably comprises a polymer in amount of 1 to 20% by mass based on the entire electrolytic composition. The polymer is preferably a cross-linking polymer, particularly a cross-linking polymer forming a cross-linked product by an onium-salt-forming reaction.

The photoelectric conversion device of the present invention comprises a conductive support, a photosensitive layer, a charge transfer layer and a counter electrode, the charge transfer layer comprising the electrolytic gel composition of the present invention. The photosensitive layer preferably comprises fine semiconductor particles sensitized by a dye. The fine semiconductor particles preferably comprise titanium dioxide. The photoelectric cell of the present invention comprises such a photoelectric conversion device.

### BRIEF DESCRIPTION OF THE DRAWINGS

Fig. 1 is a partial cross sectional view showing an example of the internal structure of the photoelectric conversion device of the present invention;
Fig. 2 is a partial cross sectional view showing another example of the internal structure of the photoelectric conversion device of the present invention;
Fig. 3 is a partial cross sectional view showing a further example of the internal structure of the photoelectric conversion device of the present invention;
Fig. 4 is a partial cross sectional view showing a still further example of the internal structure of the photoelectric conversion device of the present invention;
Fig. 5 is a partial cross sectional view showing a still further example of the internal structure of the photoelectric conversion device of the present invention;
Fig. 6 is a partial cross sectional view showing a still further example of the internal structure of the photoelectric conversion device of the present invention;
Fig. 7 is a partial cross sectional view showing a still further example of the internal structure of the photoelectric conversion device of the present invention;
Fig. 8 is a partial cross sectional view showing a still further example of the internal structure of the photoelectric conversion device of the present invention;
Fig. 9 is a partial cross sectional view showing a still further example of the internal structure of the photoelectric conversion device of the present invention;
Fig. 10 is a partial cross sectional view showing the structure of a photoelectric conversion device prepared in Examples;
Fig. 11(a) is a schematic plan view showing a titanium dioxide electrode used in Examples;
Fig. 11(b) is a schematic plan view showing a counter electrode constituted by attaching a spacer to a platinum-vapor-deposited glass substrate;
Fig. 11(c) is a schematic plan view showing the overlapping of a titanium dioxide electrode and a counter electrode; and
Fig. 12 is a schematic plan view showing a dye-adsorbed titanium dioxide electrode used in Examples, to which a spacer is attached.

### DETAILED DESCRIPTION OF THE PREFERRED EMBODIMENTS

### [1] Electrolytic composition

The electrolytic composition of the present invention comprises a molten-at-room-temperature salt and fine, inorganic particles. Further, the electrolytic composition may contain a solvent, iodine, etc. The amount of the molten-at-room-temperature salt is preferably 60% by mass or more, more preferably 70 to 95% by mass, based on the entire electrolytic composition. The amount of the fine, inorganic particles is 1 to 10% by mass, more preferably 1 to 6% by mass, based on the entire electrolytic composition. In the present invention, by adding fine, inorganic particles to an electrolytic composition having a high content of a molten-at-room-temperature salt, the electrolytic composition can be provided with increased viscosity and decreased flowability without deteriorating charge transportability (ion transportability). It is also preferable in the present invention to add a polymer, etc. to cause the viscosity increase or gelation of the electrolytic composition.

### (A) Molten-at-room-temperature salt

The molten-at-room-temperature salt is a salt in a liquid state at room temperature or a salt having a low melting point. A plurality of molten salts, which are solid at room temperature, may be mixed to provide a composition that is liquid at room temperature, as long as they have low melting points. The melting point of the molten-at-room-temperature salt is preferably 45°C or lower, more preferably 25°C or lower. Examples of the molten-at-room-temperature salts used in the present invention include pyridinium salts, imidazolium salts and triazolium salts disclosed in WO 95/18456, JP 8-259543 A, "Denki Kagaku (Electrochemistry)," 65, 11, 923 (1997). The molten salts described in JP 2001-320068 A, paragraphs 0066 to 0082 are also usable in the present invention.

The molten-at-room-temperature salts may be used alone or in combination. The molten-at-room-temperature salt preferably comprises an iodine salt. The molten-at-room-temperature salt may be used in combination with another alkali metal salt such as LiI, NaI, KI, LiBF₄, CF₃COOLi, CF₃COONa, LiSCN, and NaSCN. The electrolytic composition of the present invention may contain redox couples such as (a) a combination of I₂ and iodide (a metal iodide such as LiI, NaI, KI, CsI and CaI₂, a quaternary ammonium iodide such as tetraalkylammonium iodide, pyridinium iodide and imidazolium iodide); (b) a combination of Br₂ and a bromide (a metal bromide such as LiBr, NaBr, KBr, CsBr and CaBr₂, a quaternary ammonium bromide such as tetraalkylammonium bromide, pyridinium bromide and imidazolium bromide); (c) a combination of Cl₂ and chloride (a metal chloride such as LiCl, NaCl, KCl, CsCl, CaCl₂, a quaternary ammonium chloride such as tetraalkylammonium chloride, pyridinium chloride and imidazolium chloride); (d) a sulfur compound such as sodium polysulfide and alkylthiol-alkyldisulfide; (e) a viologen dye; hydroquinone-quinone; etc. Preferable among them is a combination of I₂ and iodide, more preferable being a combination of I₂ and a quaternary ammonium iodide. The redox couple may be used alone or in combination. The amount of I₂ in the electrolytic composition is preferably 0.1 to 20% by mass, based on the entire electrolytic composition, more preferably 0.5 to 10% by mass.

### (B) Fine, inorganic particles

Though the materials of fine, inorganic particles are not particularly limited as long as it is inactive with electrolyte, the materials are oxides of titanium, tin, zinc, iron, tungsten, zirconium, hafnium, strontium, indium, cerium, yttrium, lanthanum, vanadium, niobium, tantalum, aluminum, silicon, boron, phosphorus and magnesium. More preferable among them are titanium oxide, silicon oxide and aluminum oxide.

The fine, inorganic particles may be amorphous or crystalline. The fine, inorganic particles may be subjected to a surface treatment. For instance, the surfaces of the fine, inorganic particles may be treated with silicone oils, silane coupling agents, etc. to modify their hydrophobic nature. The fine, inorganic particles may be used alone or in combination.

The primary particles of the fine, inorganic particles have an average particle diameter of 1 nm to 300 nm, preferably 5 nm to 50 nm. Here, term "primary particles" means the minimum unit of particles that are not physically agglomerated, and the primary particles are agglomerated to form secondary particles.

### (C) Viscosity increase and gelation

The electrolytic composition used in the present invention preferably has increased viscosity or is gelated (solidified) by (i) adding a polymer, (ii) cross-linking a polymer, (iii) polymerizing a multifunctional monomer, (iv) adding an oil-gelling agent, etc.

### (i) Addition of polymer

When the electrolytic composition is provided with increased viscosity or gelated by adding a polymer, it is possible to use polymers described in "Polymer Electrolyte Reviews 1 and 2," edited by J. R. MacCallum and C. A. Vincent, ELSEIVER APPLIED SCIENCE. The preferable polymers are polyacrylonitrile and polyvinylidene fluoride. Also, when polymers having basic moieties described in JP 2000-8672 A and JP 2000-322932 A are used, the basic moieties are adsorbed onto the surfaces of the fine, inorganic particles so that the polymers act as cross-linking agents, resulting in providing effective viscosity increase to the electrolytic composition. The basic moieties include amino groups, nitrogen-containing heterocyclic groups, etc., and the nitrogen-containing heterocyclic groups may have ring structures such as a pyridine ring, an imidazole ring, a thiazole ring, an oxazole ring, a triazole ring, a morpholine ring, a piperidine ring and a piperazine ring. The amount of the polymer added is preferably 0.1 to 40% by mass, more preferably 1 to 20% by mass, based on the entire electrolytic composition.

### (ii) Cross-linking reaction of polymer

When the electrolytic composition is provided with increased viscosity or gelated by the cross-linking reaction of a polymer, it is preferable to use a polymer having the above-described basic moiety together with a cross-linking agent. The cross-linking agent preferably has, in a molecule, a plurality of electrophilic moieties capable of being reacted with the basic moiety of the polymer, and its examples include alkyl halides, aralkyl halides, sulfonates, acid anhydrides, acyl chlorides, isocyanates, α,β-unsaturated sulfonyl compounds, α,β-unsaturated carbonyl compounds, α,β-unsaturated nitrile compounds, etc. Particularly, in the reaction of amines having no hydrogen atom on nitrogen or polymers having nitrogen-containing heterocyclic groups with cross-linking agents having electrophilic moieties, onium salts are easily formed by heating, thereby providing cross-linked polymers.

The amount of the polymer having a basic moiety added is preferably 0.1 to 40% by mass, more preferably 1 to 20% by mass, based on the entire electrolytic composition. The ratio of the electrophilic moiety of the cross-linking agent to the basic moiety of the above polymer is preferably 3 to 0.1 mole equivalent, more preferably 1 to 0.3 mole equivalent. Specific examples of the preferred polymers and cross-linking agents are described in JP 2000-86724 A, JP 2001-35550 A and JP 2001-160427 A. The cross-linking methods disclosed in JP 2000-17076 A, JP 2000-86724 A, JP 2001-160427 and JP 2000-228234 may be used in the present invention.

### (iii) Polymerization of multifunctional monomer

When the electrolytic composition is provided with increased viscosity or gelated by the polymerization of a multifunctional monomer, it is preferable to use a method of reacting compounds having cross-linkable reactive groups such as amino groups, nitrogen-containing heterocyclic groups as described in JP 2000-322932 A, etc. with the above-described cross-linking agents to form onium salts, resulting in the formation of networks. The nitrogen-containing heterocyclic groups may have ring structures such as a pyridine ring, an imidazole ring, a thiazole ring, an oxazole ring, a triazole ring, morpholine ring, piperidine ring and piperazine ring. The compounds having cross-linkable reactive groups have a molecular weight of preferably 1,000 or less, particuraly 500 or less. The amount of this compound added is preferably 20 to 0.1% by mass, more preferably 5 to 1% by mass, based on the entire electrolytic composition. The ratio of the reactive moiety of the cross-linking agent to the reactive group of the above compound is preferably 3 to 0.1 mole equivalent, more preferably 1 to 0.3 mole equivalent.

### (iv) Addition of oil-gelling agent

When the electrolytic composition is provided with increased viscosity or gelated by adding an oil-gelling agent, it is preferable to use the oil-gelling agents described in J. Chem. Soc. Japan, Ind. Chem. Sec., 46, 779 (1943), J. Am. Chem. Soc., 111, 5542 (1989), J. Chem. Soc., Chem. Commun., 390 (1993), Angew. Chem. Int. Ed. Engl., 35, 1949 (1996), Chem. Lett., 885 (1996), J. Chem. Soc., Chem. Commun., 545 (1997), etc. Particularly preferable are oil-gelling agents having an amide structure. The gelation method disclosed in JP 11-185863 A and JP 2000-58140 A may also be used in the present invention. The molecular weight of the oil-gelling agent is preferably 1000 or less, more preferably 500 or less. The amount of the oil-gelling agent added is preferably 40 to 0.1% by mass, more preferably 5 to 1% by mass, based on the entire electrolytic composition.

### (D) Solvents

Though the electrolytic composition of the present invention may contain a solvent, it preferably does not contain a solvent because the electrolytic composition containing a molten salt preferably has low volatility. When a solvent has to be added, the amount of the solvent added is preferably 30% by mass or less based on the entire electrolytic composition.

Solvents preferably added to the electrolytic composition are those having high ion conductivity because of low viscosity and excellent ion conductibility and/or high dielectric constant and effective carrier concentration. Examples of such solvents include carbonates such as ethylene carbonate and propylene carbonate; heterocyclic compounds such as 3-methyl-2-oxazolidinone; ethers such as dioxan, diethyl ether and THF; linear ethers such as ethylene glycol dialkylethers, propylene glycol dialkylethers, polyethylene glycol dialkylethers and polypropylene glycol dialkylethers; alcohols such as methanol, ethanol, ethylene glycol monoalkylethers, propylene glycol monoalkylethers, polyethylene glycol monoalkylethers and polypropylene glycol monoalkylethers; glycols such as ethylene glycol, propylene glycol, polyethylene glycol, polypropylene glycol and glycerin; nitriles such as acetonitrile, glutarodinitrile, methoxyacetonitrile, propionitrile, benzonitrile and biscyanoethyl ether; esters such as carboxylates, phosphates and phosphonates; aprotic polar solvents such as dimethylsulfoxide (DMSO) and sulfolane; water; etc. Two or more of these solvents may be mixed together.

### (E) Other components

The electrolytic composition of the present invention may further contain basic compounds such as t-butylpyridine, 2-picoline, 2,6-lutidine, etc. described in J. Am. Ceram. Soc., 80 (12), 3157-3171 (1997). The concentration of the basic compound is preferably 0.05 to 2 mol/L based on the electrolytic composition.

### [2] Photoelectric conversion device

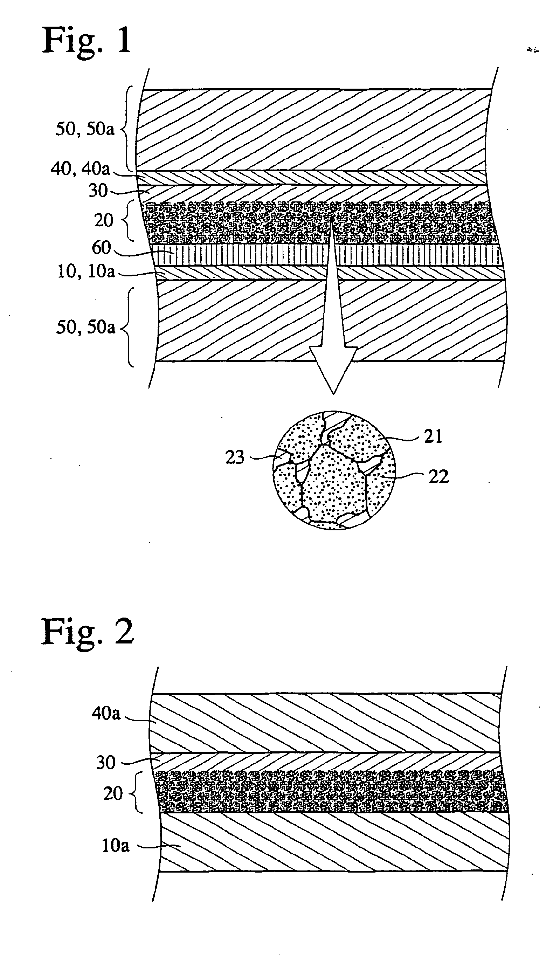

The photoelectric conversion device of the present invention has a conductive layer, a photosensitive layer, a charge transfer layer and a counter electrode. The charge transfer layer comprises the above-mentioned electrolytic composition of the present invention. As shown in Fig. 1, the photoelectric conversion device of the present invention preferably has a laminate structure comprising a conductive layer 10, a photosensitive layer 20 comprising fine semiconductor particles 21 sensitized by a dye 22 and a charge-transporting material 23 penetrating into voids among the fine semiconductor particles 21, a charge transfer layer 30, and a counter electrode layer 40 in this order. The charge-transporting material 23 is preferably the same as the electrolytic composition used in the charge transfer layer 30. The photoelectric conversion device of the present invention may have an undercoating layer 60 between a conductive layer 10 and a photosensitive layer 20. The conductive layer 10 and/or the counter electrode layer 40 may be supported by a substrate 50 to improve the strength of the photoelectric conversion device. A layer composed of the conductive layer 10 and the substrate 50 optionally used for supporting it is referred to as "conductive support," and a layer composed of the counter electrode layer 40 and the substrate 50 optionally used for supporting it is referred to as "counter electrode" hereinafter. The conductive layer 10, the counter electrode layer 40 and the substrate 50 shown in Fig. 1 may be transparent.

A photoelectric cell is constituted by connecting the photoelectric conversion device to an external circuit to electrically work or generate electricity in the external circuit. A photo sensor is such a photoelectric conversion device for sensing optical information. Such a photoelectric cell that has a charge transfer material mainly composed of an ion-conductive material is referred to as a photo-electrochemical cell. A photoelectric cell intended for power generation with solar light is referred to as a solar cell.

In the photoelectric conversion device of the present invention shown in Fig. 1, a light introduced into the photosensitive layer 20 excites the dye 22, etc., to generate excited high-energy electrons, which are transported to a conduction band of the fine semiconductor particles 21, and are diffused to reach the conductive layer 10. At this time, the dye 22 is in an oxidized form. In a photoelectric cell, electrons in the conductive layer 10 return to the oxidized dye through the counter electrode layer 40 and the charge transfer layer 30 while doing job in an outside circuit, so that the dye 22 is regenerated. The photosensitive layer 20 acts as a negative electrode. The counter electrode layer 40 acts as a positive electrode. In a boundary of adjacent layers such as the conductive layer 10 and the photosensitive layer 20; the photosensitive layer 20 and the charge transfer layer 30; the charge transfer layer 30 and the counter electrode layer 40; etc., components of each layer may be diffused and mixed. Each of the layers will be explained in detail below.

### (A) Conductive support

The conductive support is (1) a single conductive layer or constituted by (2) a conductive layer and a substrate. In the case (1), the conductive layer is preferably made of a conductive material having enough strength to fully seal the photoelectric conversion device, for example, a metal such as platinum, gold, silver, copper, zinc, titanium, aluminum and an alloy thereof. In the case (2), a substrate having a conductive layer containing an electrically conductive material formed on the photosensitive layer side may be used. Preferable examples of the electrically conductive materials include metals such as platinum, gold, silver, copper, aluminum, rhodium and indium; carbon; electrically conductive metal oxides such as indium-tin composite oxides and tin oxides doped with fluorine; etc. The conductive layer preferably has a thickness of 0.02 µm to 10 µm.

The surface resistance of the conductive support is desirably as low as possible. The surface resistance of the conductive support is preferably 100 Ω/square or less, more preferably 40 Ω/square or less. The lower limit of the surface resistance is generally about 0.1 Ω/square, though not restrictive.

When light is irradiated from the conductive support side, it is preferable that the conductive support is substantially transparent. The term "substantially transparent" used herein means that 10% or more of light transmittance is obtained. The light transmittance of the conductive support is preferably 50% or more, particularly 70% or more.

The transparent conductive support is preferably formed by coating or vapor-depositing a transparent conductive layer made of a conductive metal oxide on the transparent substrate made of a material such as glass or plastics. The transparent, conductive layer is preferably made of tin dioxide doped with fluorine. The transparent substrate may be made of a glass such as a low-cost soda glass having excellent strength. In addition, a transparent polymer film may be used as the transparent substrate to obtain a low-cost, flexible photoelectric conversion device. Materials usable for the transparent polymer films are triacetylcellulose (TAC), polyethylene terephthalate (PET), polyethylene naphthalate (PEN), syndiotactic polystyrene (SPS), polyphenylenesulfide (PPS), polycarbonate (PC), polyarylate (PAr), polysulfone (PSF), polyestersulfone (PES), polyetherimide (PEI), cyclic polyolefins, brominated phenoxy resins, etc. To secure sufficient transparency, the amount of the electrically conductive metal oxide coated is preferably 0.01 to 100 g per 1 m² of the glass or plastic substrate.

It is preferable to use a metal lead to reduce the resistance of the transparent conductive support. The metal lead is preferably made of a metal such as platinum, gold, nickel, titanium, aluminum, copper, silver, etc., particularly aluminum or silver. The metal lead is preferably formed on the transparent substrate by a vapor deposition method, a sputtering method, etc., preferably with a transparent, conductive layer comprising conductive tin oxide or ITO formed thereon. After the transparent, conductive layer is formed on the transparent substrate, the metal lead is preferably formed on the conductive transparent layer. Decrease in the quantity of incident light by the metal lead is suppressed to preferably 10% or less, more preferably 1% to 5%.

### (B) Photosensitive layer

The photosensitive layer comprises fine semiconductor particles sensitized by a dye. In the photosensitive layer, the fine semiconductor particles act as a photosensitive substance to absorb light and conduct charge separation, thereby generating electrons and holes. In the dye-sensitized, fine semiconductor particles, the light absorption and the generation of electrons and holes are primarily caused by the dye, and the fine semiconductor particles receive and convey electrons or holes. The semiconductor used in the present invention is preferably an *n*-type semiconductor, in which electrons act as carriers under a photo-excitation condition to generate anode current.

### (1) Semiconductor

Used as the semiconductor in the present invention may be simple semiconductor such as silicon and germanium; a III-V series compound semiconductor; a metal chalcogenide such as a metal oxide, a metal sulfide, a metal selenide; a compound having a perovskite structure such as strontium titanate, calcium titanate, sodium titanate, barium titanate and potassium niobate; etc.

Preferable examples of the metal chalcogenide include oxides of titanium, tin, zinc, iron, tungsten, zirconium, hafnium, strontium, indium, cerium, yttrium, lanthanum, vanadium, niobium and tantalum; sulfides of cadmium, zinc, lead, silver, antimony and bismuth; selenides of cadmium or lead; cadmium telluride; etc. Additionally, compound semiconductors such as phosphides of zinc, gallium, indium or cadmium, selenides of gallium-arsenic or copper-indium, copper-indium sulfide, etc. may be used in the present invention.

Examples of the semiconductors used in the present invention are preferably Si, TiO₂, SnO₂, Fe₂O₃, WO₃, ZnO, Nb₂O₅, CdS, ZnS, PbS, Bi₂S₃, CdSe, CdTe, GaP, InP, GaAs, CuInS₂ and CuInSe₂, more preferably TiO₂, ZnO, SnO₂, Fe₂O₃, WO₃, Nb₂O₅, CdS, PbS, CdSe, InP, GaAs, CuInS₂ and CuInSe₂, further more preferably ZnO, SnO₂, WO₃, TiO₂ or Nb₂O₅, most preferably TiO₂. Known as the crystal forms of TiO₂ are an anatase-type, a rutile-type, a brookite-type, etc., and TiO₂ used in the present invention may have any of these crystal forms.

The semiconductor used in the present invention may have a monocrystalline or polycrystalline structure. From the viewpoints of production cost, stable supply of raw materials, energy-payback time, etc., the semiconductor is preferably polycrystalline, particularly a porous layer of fine semiconductor particles. The photosensitive layer may partly contain an amorphous semiconductor.

The particle size of the fine semiconductor particles is generally on the level of nm to µm. The average size of primary semiconductor particles, which is determined by averaging the diameters of circles equivalent to projected areas thereof, is preferably 5 nm to 200 nm, more preferably 8 nm to 100 nm. Further, the average size of secondary semiconductor particles in dispersion is preferably 0.01 µm to 100 µm.

Two types or more of fine semiconductor particles having different particle size distributions may be mixed. In this case, it is preferable that smaller particles have an average particle size of 5 nm to 50 nm, while larger particles have an average particle size of 100 nm to 600 nm. The smaller particles have an effect of increasing a surface area for adsorbing a dye, while the larger particles have an effect of improving a light-capturing ratio by scattering incident light. The mixing ratio (mass ratio) is such that the smaller particles are preferably 50 to 99%, more preferably 70 to 95%, and that the larger particles are preferably 1 to 50%, more preferably 5 to 30%.

Preferably usable to produce the fine semiconductor particles are sol-gel methods described in Sumio Sakka, "Science of Sol-Gel Method," issued by Agune Shofusha (1998), and "Thin Film-Coating Technology by Sol-Gel Method" (1995) issued by the Technical Information Association, etc.; and gel-sol methods described in Tadao Sugimoto, "Synthesis of Mono-Dispersion Particles and Control of Their Size and Form by Novel Gel-Sol Method," and MATERIA, Vol. 35, No. 9, pages 1012 to 1018 (1996). Also preferable are a sulfuric acid method and a chlorine method described in Manabu Seino, "Properties and Applied Technique of Titanium oxide," Gihodo Shuppan, (1997), and a method developed by Degussa, which comprises preparing oxides by subjecting chlorides to a high-temperature hydrolysis in an oxyhydrogen salt.

In the case of using the fine semiconductor particles of TiO₂, it is particularly preferable to use as the sol-gel method those described in Christophe J. Barb'e, et al, the Journal of American Ceramic Society, Vol. 80, No. 12, pages 3157 to 3171 (1997), and Burnside, et al, Chemistry of Materials, Vol. 10, No. 9, pages 2419 to 2425.

### (2) Layer of fine semiconductor particles

The fine semiconductor particles are generally applied to the conductive support by a method for coating a conductive support with a dispersion or colloidal liquid containing fine semiconductor particles. A wet-type film production method is relatively advantageous for the mass production of the photoelectric conversion device, the improvement of properties of the liquid containing fine semiconductor particles, the improvement of the adaptability of the conductive support, etc. Typical examples of such wet-type film production methods are a coating method and a printing method.

The dispersion containing fine semiconductor particles may be prepared by using a dispersion or a colloid liquid prepared by the above sol-gel method, etc. without treatment; by crushing the semiconductor in a mortar; or by dispersing the semiconductor while grinding it in a mill.

Usable as dispersion solvents for the fine semiconductor particles are water or organic solvents such as methanol, ethanol, isopropyl alcohol, dichloromethane, acetone, acetonitrile, ethyl acetate, etc. Polymers such as polyethylene glycol, surfactants, acids, chelating agents, etc. may be used as dispersing agents, if necessary. Polyethylene glycol is preferably added to the dispersion, because changing the molecular weight of the polyethylene glycol makes it possible to control the viscosity of the dispersion, and form a layer of fine semiconductor particles resistant to peeling.

Preferable coating methods include application methods such as a roller method and a dipping method, metering methods such as an air-knife method and a blade method, etc. Further, preferable as methods for applying and metering in the same portion are a wire-bar method disclosed in JP 58-4589 B, a slide-hopper method described in U.S. Patents 2,681,294, 2,761,419 and 2,761,791, an extrusion method, a curtain method, etc. Further preferable as commonly usable methods are a spin method and a spray method. Usable as wet printing methods are three major printing methods by relief printing, offset printing and gravure printing, as well as an intaglio printing method, a gum printing method, a screen printing method, etc. A film production method may be selected from these methods depending on the viscosity of the dispersion and the desired wet thickness.

The viscosity of the dispersion comprising the fine semiconductor particles largely depends on the kind and dispersibility of the fine semiconductor particles, and the kinds of solvents and additives such as surfactants and binders. Preferably usable for high-viscosity dispersions (for example, 0.01 to 500 poise) are an extrusion method, a casting method, a screen-printing method, etc. Preferable for forming uniform films from low-viscosity dispersions (e.g. 0.1 poise or less) are a slide-hopper method, a wire-bar method and a spin-coating method. The extrusion method may be used for the low-viscosity dispersion if a considerably large amount of the dispersion is coated. The film production methods may thus be selected depending on the viscosity of a dispersion, the amount of a dispersion coated, the material of a support, a coating speed, etc.

The layer of fine semiconductor particles is not limited to a single layer. Dispersions comprising the fine semiconductor particles having different particle sizes may be coated to form a multi-layer coating. Alternatively, dispersions containing different fine semiconductor particles, binders or additives may be coated to form a multi-layer coating. The multi-layer coating is effective, when it is impossible to form a layer having a sufficient thickness by one coating step. Suitable for the multi-layer coating are an extrusion method and a slide-hopper method. At the time of forming the multi-layer coating, a plurality of layers may be coated simultaneously or successively from several times to ten-odd times. In the latter case, a screen-printing method is also preferably used.

Generally, the thicker the layer of fine semiconductor particles (as thick as the photosensitive layer), the higher the light-capturing rate, because a larger amount of the dye is incorporated therein per a unit-projected area. In this case, however, there is large loss owing to recombination of electric charges because of increased diffusion distance of the generated electrons. Thus, the preferable thickness of the layer of fine semiconductor particles is 0.1 µm to 100 µm. When the photoelectric conversion device of the present invention is used in a solar cell, the thickness of the layer of fine semiconductor particles is preferably 1 µm to 30 µm, more preferably 2 µm to 25 µm. The amount of the fine semiconductor particles applied to the conductive support is preferably 0.5 g to 400 g, more preferably 5 g to 100 g, per 1 m² of the conductive support.

After applying the fine semiconductor particles to the conductive support, the semiconductor particles are preferably subjected to a heat treatment, thereby bringing them into electronic contact with each other, and thus increasing the strength of the resultant coating and the adherence to the conductive support. The heating temperature is preferably 40°C to 700°C, more preferably 100°C to 600°C. The heating time is preferably about 10 minutes to about 10 hours. When a substrate such as a polymer film having a low melting or softening point is used, a high-temperature treatment is not preferable because it tends to deteriorate such a substrate. The heat treatment is preferably carried out at as low a temperature as possible from the viewpoint of cost. Such a low-temperature heat treatment can be made possible by the presence of fine semiconductor particles having a size of 5 nm or less, a mineral acid, etc.

After the heat treatment, the layer of fine semiconductor particles may be subjected to a chemical metal-plating using an aqueous titanium tetrachloride solution, etc. or electrochemical metal-plating using an aqueous titanium trichloride solution, etc., to increase the surface area and purity of the fine semiconductor particles, thereby improving the efficiency of injecting electrons into the particles from the dye.

The layer of fine semiconductor particles preferably has a large surface area to adsorb a large amount of a dye. The layer of fine semiconductor particles coated onto the substrate has a surface area of preferably 10 times or more, more preferably 100 times or more, its projected area. The upper limit of the surface area is generally about 1,000 times, though it is not particularly limited.

### (3) Treatment

In the production method of the present invention, the fine semiconductor particles used for the photosensitive layer may be treated with a metal compound solution. The term "treatment" used herein means an operation for bringing the above fine semiconductor particles into contact with the above solution before the fine semiconductor particles adsorb a dye. After the contact, the above metal compound may or may not be adsorbed onto the fine semiconductor particles. The treatment is preferably carried out after the above layer of fine semiconductor particles is formed.

Examples of the metal compounds include alkoxides, halides, etc. of at least one metal selected from the group consisting of scandium, yttrium, lanthanoids, zirconium, hafnium, niobium, tantalum, gallium, indium, germanium and tin. A solution of the metal compound is usually an aqueous solution or an alcohol solution.

The preferred treatment method may be a method in which fine semiconductor particles are immersed in a metal compound solution (immersion method). In addition, a method of spraying a metal compound solution for a predetermined time (spraying method) is also usable. Though not restrictive, the temperature of the metal compound solution in carrying out the immersion method (immersion temperature) is typically -10 to 70°C, preferably 0°C to 40°C. The treatment time is also not particularly restrictive but may be typically 1 minute to 24 hours, preferably 30 minutes to 15 hours. After the immersion, the fine semiconductor particles may be washed with distilled water. Also, to strengthen the bonding of substances attached to the fine semiconductor particles by the immersion treatment, burning may be carried out. The burning conditions may be set similarly to the above-described heat treatment conditions.

### (4) Dye

Any compounds capable of absorbing visible and near infrared rays to sensitize the semiconductor may be used as the dyes for the photosensitive layer. Preferable examples of such dyes include metal complex dyes, methine dyes, porphyrin-type dyes and phthalocyanine dyes. Two or more kinds of dyes may be used in combination to obtain a large photoelectric conversion wavelength region and high photoelectric conversion efficiency. In the case of using a plurality of dyes, the kinds and mixing ratios of the dyes may be determined depending on the wavelength region and strength distribution of the light source.

The dye preferably has an appropriate interlocking group for interacting with the surface of the fine semiconductor particles. Preferable interlocking groups include acid groups such as -COOH, -OH₂-SO₂H, -P(O)(OH)₂ and -OP(O)(OH)₂, and π-conductive chelating groups such as oxime, dioxime, hydroxyquinoline, salicylate and α-ketoenolate groups. Particularly preferable among them are -COOH, -P(O)(OH)₂ and -OP(O)(OH)₂. The interlocking group may form a salt with an alkali metal, etc. or an intramolecular salt. If the methine chain of the polymethine dye has an acid group as in the case where the methine chain forms a squarylium or croconium ring, it may act as the interlocking group. Specific examples of preferred dyes used for the photosensitive layer in the present invention are described in detail in JP 2001-320068 A, paragraphs 0050 to 0059.

### (5) Adsorption of dye onto fine semiconductor particles

The dye may be adsorbed onto the fine semiconductor particles by soaking the conductive support having the well-dried layer of fine semiconductor particles in a dye solution, or by coating the dye solution to the layer of fine semiconductor particles. In the former case, a soaking method, a dipping method, a roller method, an air-knife method, etc. may be used. In the soaking method, the dye may be adsorbed at room temperature or under reflux while heating as described in JP 7-249790 A. As the latter coating method, a wire-bar method, a slide-hopper method, an extrusion method, a curtain method, a spin-coating method, a spraying method, etc. may be used. Also, the dye may be applied in the form of image to the substrate by an inkjet printing method, etc., and this image per se may be used as a photoelectric conversion device.

Preferable examples of solvents for dissolving the dye include alcohols such as methanol, ethanol, *t*-butanol and benzyl alcohol; nitriles such as acetonitrile, propionitrile and 3-methoxypropionitrile; nitromethane; halogenated hydrocarbons such as dichloromethane, dichloroethane, chloroform and chlorobenzene; ethers such as diethylether and tetrahydrofuran; dimethylsulfoxide; amides such as *N,N-*dimethylformamide and *N,N-*dimethylacetamide; *N*-methylpyrrolidone; 1,3-dimethylimidazolidinone; 3-methyloxazolidinone; esters such as ethyl acetate and butyl acetate; carbonates such as diethyl carbonate, ethylene carbonate and propylene carbonate; ketones such as acetone, 2-butanone and cyclohexanone; hydrocarbons such as hexane, petroleum ether, benzene and toluene; and mixtures thereof.

The amount of the dye adsorbed is preferably 0.01 to 100 mmol per a unit surface area (1 m²) of the layer of fine semiconductor particles. The amount of the dye adsorbed onto the fine semiconductor particles is preferably 0.01 to 1 mmol per 1 g of the fine semiconductor particles. With this adsorption amount of the dye, the semiconductor can be sufficiently sensitized. Too small an amount of the dye results in insufficient sensitization. On the other hand, if the amount of the dye is excessive, the dye not adsorbed onto the fine semiconductor particles is free, thereby reducing the sensitization of the fine semiconductor particles. To increase the adsorption amount of the dye, it is preferable that the layer of fine semiconductor particles is subjected to a heat treatment before the dye is adsorbed thereonto. After the heat treatment, it is preferable for the layer of fine semiconductor particles to quickly adsorb the dye while it is still at 60 to 150°C without returning to the room temperature, to prevent water from adsorbing onto the layer of fine semiconductor particles.

To weaken interaction such as association between the dyes, a colorless compound having surface activity may be co-adsorbed onto the fine semiconductor particles together with the dye. Examples of the colorless compounds include steroid compounds (for example, cholic acid, deoxycholic acid, chenodeoxycholic acid, taurodeoxycholic acid, etc.) having a group such as a carboxyl group and a sulfo group, and sulfonates shown below.

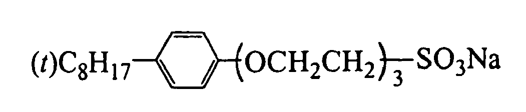

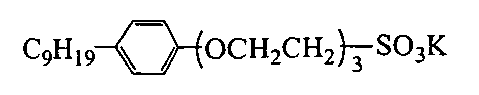

The dye not adsorbed on the layer of fine semiconductor particles is preferably removed by washing immediately after the dye adsorption process. The washing is preferably carried out in a wet-type washing bath with an organic solvent such as acetonitrile and an alcohol solvent.

The surfaces of the fine semiconductor particles may be treated with an amine compound or a quaternary salt thereof after the dye adsorption process. The amine compound is preferably pyridine, 4-*t*-butylpyridine, polyvinylpyridine, etc., and the quaternary salt is preferably tetrabutylammonium iodide, tetrahexylammonium iodide, etc. The amine compound or the quaternary salt may be used alone if it is liquid, or may be used in the form of a solution in an organic solvent.

### (C) Charge transfer layer

The charge transfer layer comprises the electrolytic composition of the present invention described above. Used in the photoelectric conversion device of the present invention together with the above electrolytic composition of the present invention is (i) an ion-conductive, charge transfer material or (ii) a charge transfer material in a solid state through which carriers can be transported. Examples of the ion-conductive, charge transfer materials (i) include molten electrolytic salt compositions containing redox couples; electrolyte solutions having redox couples dissolved in solvents; so-called electrolytic gel compositions having solutions containing redox couples penetrating into polymer matrices; solid electrolytic compositions; etc. Examples of the carrier-transporting charge transfer materials (ii) include electron-transporting materials and hole-transporting materials.

The charge transfer layer may be formed by any of the following two methods. One method is to attach a counter electrode to a photosensitive layer beforehand and cause a material for a charge transfer layer in a liquid state to penetrate into a gap therebetween. Another method is to directly form a charge transfer layer on a photosensitive layer, and then form a counter electrode thereon. In the former method, the charge transfer material may be caused to penetrate into the gap by a normal pressure process utilizing capillarity, or by a reduced pressure process where the material is sucked into the gap to replace a gas phase therein with a liquid phase. In the case of forming a wet charge transfer layer by the latter method, a counter electrode is generally attached while the charge transfer layer is still wet, to prevent the leakage of a liquid in edge portions. In the case of a solid electrolytic composition, the charge transfer layer may be formed by a dry film-forming method such as a vacuum deposition method and a CVD method.

As mentioned above, in the present invention, the electrolytic composition is provided with increased viscosity or gelated to form a charge-transporting layer in a gel form, preferably by (i) adding a polymer, (ii) cross-linking a polymer, (iii) polymerizing a multifunctional monomer, (iv) adding an oil-gelling agent, etc. In this case, the electrolytic composition containing the above-described cross-linking agent and oil-gelling agent, etc. is usually applied to the photosensitive layer so that it penetrates into gaps between the fine semiconductor particles, thereby achieving viscosity increase or gelation. The gelation may be carried out before or after the formation of the counter electrode layer.

Because solation and gelation are usually thermally reversible in the above methods (i) and (iv), the electrolytic composition may be heated for solation, applied to the photosensitive layer and then gelated by cooling to a gelation temperature. Alternatively, because gelation occurs by a cross-linking reaction in the above methods (ii) and (iii), the electrolytic composition containing an unreacted cross-linking agent and a monomer is applied to the photosensitive layer and heated for gelation.

A plurality of charge-transporting layers in a gel form may be laminated. In the case of forming a plurality of charge-transporting layers, each layer may be the same or different. Here, the term "different layers" means layers having different electrolytic compositions such as those containing different types or concentrations of cross-linking agents (or gelating agents). For instance, the electrolytic gel composition layer of the present invention containing fine, inorganic particles may be laminated on the electrolytic gel composition layer containing no fine, inorganic particles to improve electronic contact with the counter electrode. Alternatively, an electrolytic gel composition layer having a low cross-linking agent concentration is formed on the side of the photosensitive layer required to have high charge transportability, while an electrolytic gel composition layer having a high cross-linking agent concentration may be formed on the side of the counter electrode required to have high mechanical strength. Further, after causing the electrolytic composition containing no cross-linking agent to penetrate into the photosensitive layer, a layer of an electrolytic composition containing a cross-linking agent may be formed thereon.

In the case of the electrolytic composition having so high viscosity that it does not penetrate into the photosensitive layer rapidly, an electrolytic composition diluted with a low-boiling-point organic solvent may be caused to penetrate into the photosensitive layer, and then the organic solvent may be removed.

### (D) Counter electrode

Like the above conductive support, the counter electrode may be a single conductive layer or a laminate of the conductive layer and the substrate. Examples of electrically conductive materials used for the counter electrode layer include metals such as platinum, gold, silver, copper, aluminum, magnesium and indium; carbon; and electrically conductive metal oxides such as an indium-tin composite oxide and a fluorine-doped tin oxide. Preferable among them are platinum, gold, silver, copper, aluminum and magnesium. The substrate for the counter electrode is preferably a glass or plastic plate, to which the above electrically conductive material is applied by coating or vapor deposition. The counter electrode layer preferably has a thickness of 3 nm to 10 µm, although the thickness is not particularly limited. The surface resistance of the counter electrode layer is desirably as low as possible. The surface resistance is preferably 50 Ω/square or less, more preferably 20 Ω/square or less.

Because light may be irradiated from either one or both sides of the conductive support and the counter electrode, at least one of them should be substantially transparent so that light can reach the photosensitive layer. To improve the efficiency of power generation, it is preferable that the conductive support is substantially transparent to permit light to pass therethrough. In this case, the counter electrode is preferably reflective to light. Such a counter electrode may be a glass or plastic plate vapor-deposited with a metal or an electrically conductive oxide, or a thin metal film.

The counter electrode may be formed by coating, plating or vapor deposition (PVD, CVD, etc.) of the electrically conductive material directly onto the charge transfer layer, or by attaching the conductive layer formed on the substrate to the charge transfer layer. As in the conductive support, it is preferable to use a metal lead to reduce the resistance of the counter electrode, particularly when the counter electrode is transparent. Preferable materials and formation methods of the metal lead, decrease in the amount of incident light, etc. are the same as in the conductive support.

### (E) Other layers

A thin, dense semiconductor film is preferably formed as an undercoating layer between the conductive support and the photosensitive layer, to prevent short-circuiting between the counter electrode and the conductive support. The prevention of short-circuiting by this undercoating layer is effective particularly in the case of the charge transfer layer comprising the electron-transporting material or the hole-transporting material. The undercoating layer is made of preferably TiO₂, SnO₂, Fe₂O₃, WO₃, ZnO or Nb₂O₅, more preferably TiO₂. The undercoating layer may be formed by a spray-pyrolysis method described in Electrochim. Acta, 40, 643-652 (1995), a sputtering method, etc. The thickness of the undercoating layer is preferably 5 nm to 1,000 nm, more preferably 10 nm to 500 nm.

Functional layers such as a protective layer and a reflection-preventing layer may be formed on either one or both of the conductive support and the counter electrode, between the conductive layer and the substrate, or in the substrate. The functional layers may be formed by a coating method, a vapor deposition method, an attaching method, etc. depending on their materials.

### (F) Interior structure of photoelectric conversion device

As described above, the photoelectric conversion device may have various interior structures depending on its use. It is classified into two major structures, one allowing light incidence from both faces, and another allowing it from only one side. Figs. 2 to 9 illustrate the interior structures of the photoelectric conversion device, to which the present invention is preferably applicable.

In the structure illustrated in Fig. 2, a photosensitive layer 20 and a charge transfer layer 30 are formed between a transparent, conductive layer 10a and a transparent counter electrode layer 40a. This structure allows light incidence from both sides of the device.

In the structure illustrated in Fig. 3, a transparent substrate 50a partially having a metal lead 11 is provided with a transparent, conductive layer 10a, an undercoating layer 60, a photosensitive layer 20, a charge transfer layer 30 and a counter electrode layer 40 in this order, and further provided with a substrate 50 thereon. This structure allows light incidence from the side of the conductive layer.

In the structure illustrated in Fig. 4, a substrate 50 having a conductive layer 10 is provided with a photosensitive layer 20 via an undercoating layer 60, and then provided with a charge transfer layer 30 and a transparent counter electrode layer 40a thereon, and further provided with a transparent substrate 50a locally having a metal lead 11 inside. This structure allows light incidence from the side of the counter electrode.

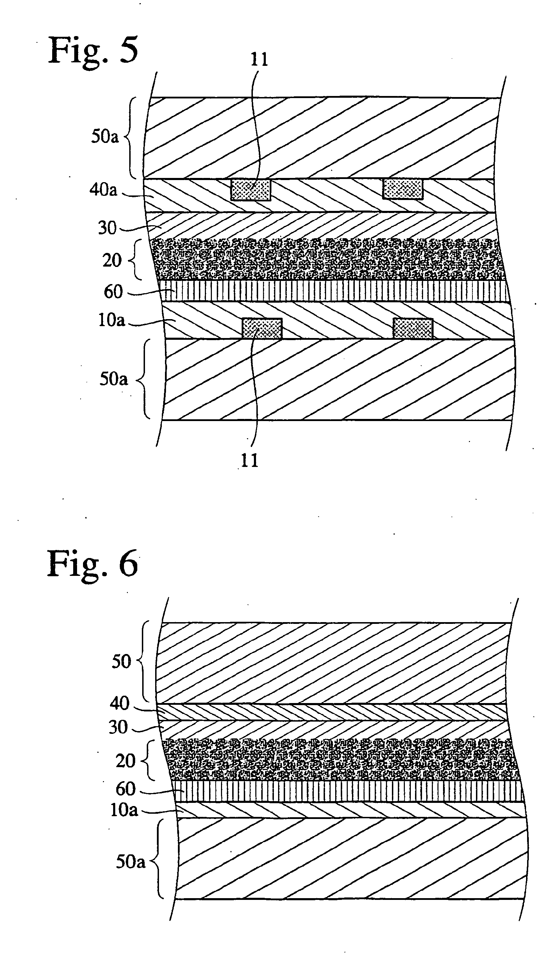

In the structure illustrated in Fig. 5, two transparent substrates 50a each partially having a metal lead 11 are provided with a transparent, conductive layer 10a or 40a, and then provided with an undercoating layer 60, a photosensitive layer 20 and a charge transfer layer 30 between the conductive layers. This structure allows light incidence from both sides of the photoelectric conversion device.

In the structure illustrated in Fig. 6, a transparent substrate 50a is provided with a transparent, conductive layer 10a, an undercoating layer 60, a photosensitive layer 20, a charge transfer layer 30 and a counter electrode layer 40 in this order, and then attached to a substrate 50. This structure allows light incidence from the side of the conductive layer.

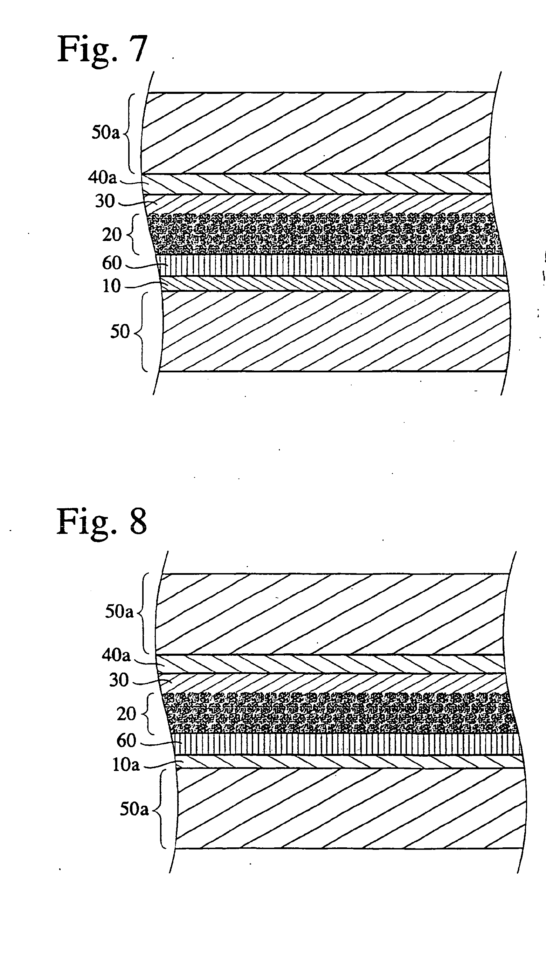

In the structure illustrated in Fig. 7, a substrate 50 is provided with a conductive layer 10, an undercoating layer 60, a photosensitive layer 20, a charge transfer layer 30 and a transparent counter electrode layer 40a in this order, and then attached to a transparent substrate 50a. This structure allows light incidence from the side of the counter electrode.

In the structure illustrated in Fig. 8, a transparent substrate 50a is provided with a transparent, conductive layer 10a, an undercoating layer 60, a photosensitive layer 20, a charge transfer layer 30 and a transparent counter electrode layer 40a in this order, and then attached to a transparent substrate 50a. This structure allows light incidence from both sides of the photoelectric conversion device.

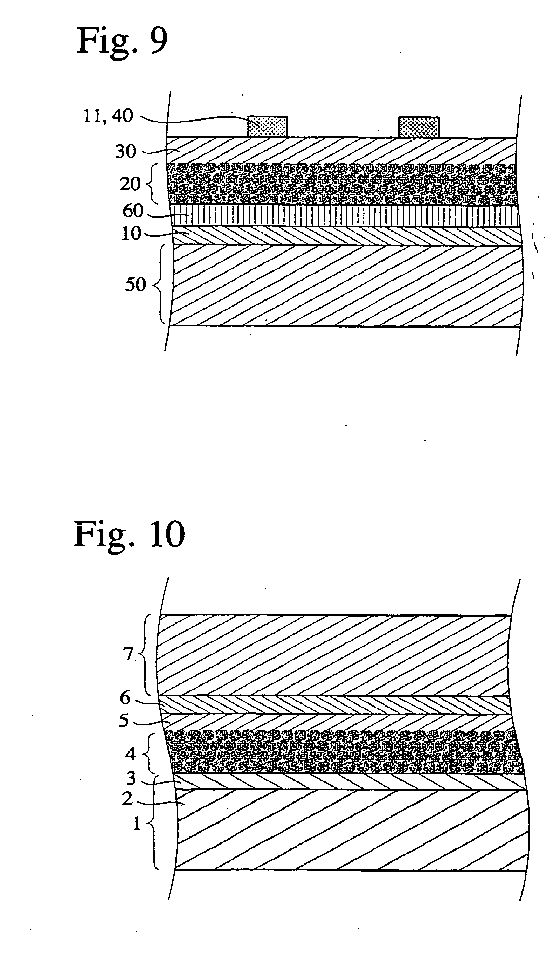

In the structure illustrated in Fig. 9, a substrate 50 is provided with a conductive layer 10, an undercoating layer 60, a photosensitive layer 20, a solid charge transfer layer 30 in this order, and then partially provided with a counter electrode layer 40 or a metal lead 11. This structure allows light incidence from the side of the counter electrode.

### [3] Photoelectric cell

The photoelectric cell of the present invention comprises the above photoelectric conversion device of the present invention to do job or generate electricity in an external circuit. Such a photoelectric cell that has the charge transfer layer comprising the ion-conductive electrolytic composition is generally referred to as a photo-electrochemical cell. The photoelectric cell intended for generating power with solar light is referred to as a solar cell.

The edges of the photoelectric cell are preferably sealed with a polymer or an adhesive, etc. to prevent the cell content from deteriorating and evaporating. A known external circuit may be connected to the conductive support and the counter electrode via a lead.

When the photoelectric conversion device of the present invention is used for a solar cell, the interior structure of the solar cell may be essentially the same as that of the photoelectric conversion device mentioned above. The solar cell comprising the photoelectric conversion device of the present invention may have a known module structure. In a general module structure of the solar cell, a cell is disposed on a substrate of metal, ceramic, etc. and covered with a packing resin, a protective glass plate, etc., whereby light is introduced from the opposite side of the substrate. The solar cell module may have a structure where the cell is placed on a substrate of a transparent material such as a tempered glass to introduce light from the transparent substrate side. Specifically, a superstraight-type module structure, a substrate-type module structure, a potting-type module structure, substrate-integrated module structure that is generally used in amorphous silicon solar cells, etc. are known as the solar cell module structure. The dye-sensitive solar cell of the present invention may have a module structure properly selected from the above structures depending on ends, locations and environment where it is used, and preferably has a module structure disclosed in JP 2000-268892 A, etc.

The present invention will be explained in more detail with reference to Examples below without intention of restricting the scope of the present invention.

### Example 1

### 1. Preparation of electrolytic composition

1 g of a dispersion containing 6.8% by mass of colloidal silica ("AEROSIL RX200") having an average particle diameter of about 12 nm available from Nippon Aerosil Co., Ltd. in acetonitrile was added to 1 g of the following molten salt Y-a, and acetonitrile was removed in vacuum to obtain an electrolytic composition. This electrolytic composition had no flowability at room temperature.

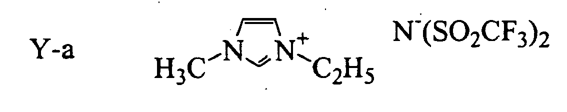

### 2. Measurement of ion conductivity

Each of the molten salt Y-a and the electrolytic composition of Example 1 was sandwiched by two platinum-deposited glass plates via 100-nm-thick Teflon tape spacers, to measure ion conductivity by an AC impedance method at 25°C. As a result, the ionic conductivity of the molten salt Y-a was 1.25 × 10⁻³ S/cm, and the ionic conductivity of the electrolytic composition of Example 1 was 1.05 × 10⁻³S/cm.

It is thus clear that the electrolytic composition of the present invention can keep high ionic conductivity with substantially no flowability.

### Example 2

### 1. Preparation of titanium dioxide dispersion

A dispersion of titanium dioxide particles, whose concentration was 11% by mass, was prepared in the same manner as in the method described in Christophe J. Barb'e, et al, the Journal of American Ceramic Society, Vol. 80, No. 12, page 3157 (1997) except that an autoclave temperature was 230°C. The average particle diameter of the titanium dioxide particles in the dispersion was about 10 nm. Added to and mixed with this dispersion was polyethylene glycol (molecular weight: 20,000, available from Wako Pure Chemical Industries, Ltd) in an amount of 20% by mass based on the titanium dioxide, to obtain a dispersion of titanium dioxide particles.

### 2. Preparation of dye-adsorbed titanium dioxide electrode

The above dispersion of titanium dioxide particles was applied to an electrically conductive, transparent glass plate of 2 cm × 10 cm coated with fluorine-doped tin oxide (surface resistance: approximately 10 Ω/cm², available from Nippon Sheet Glass Co., Ltd.,) on the conductive layer side at a thickness of 120 µm by a doctor blade, and dried at 25°C for 30 minutes. Thereafter, it was heat-treated at 450°C for 30 minutes in an electric furnace "muffle furnace FP-32" available from YAMATO SCIENTIFIC CO., LTD. to form a titanium dioxide layer, resulting in a titanium dioxide electrode. The amount of titanium dioxide coated per a unit area (1 m²) of the electrically conductive, transparent glass plate was 18 g/m², and the thickness of the titanium dioxide layer was 12 µm.

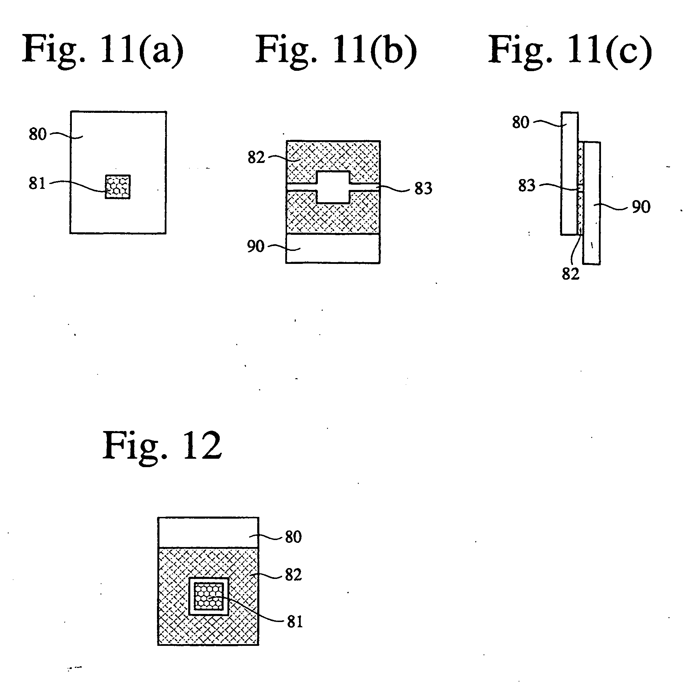

After the completion of heat treatment, the titanium dioxide electrode was cooled, and the transparent conductive glass plate 80 was cut to 2 cm × 1.5 cm as shown in Fig. 11(a), and the titanium dioxide layer 81 was removed in an area of 4 mm × 4 mm. The titanium dioxide electrode was immersed in a dye adsorption liquid at 25°C for 16 hours, washed with ethanol and acetonitrile successively and then dried in the dark in a nitrogen gas stream to provide a dye-adsorbed titanium dioxide electrode. The above dye adsorption liquid contained a ruthenium complex dye R- 1 in a mixed solvent of ethanol and acetonitrile (volume ratio of ethanol to acetonitrile was 1 to 1). Incidentally, the ruthenium complex dye R-1 was a cis-(dithiocyanate)-N,N'-bis(2,2'-bipyridyl-4,4'-dicarboxilic acid) ruthenium (II) complex, and the concentration of the ruthenium complex dye R-1 in the dye adsorption liquid was 3 x 10⁻⁴ mol/L.

### 3. Preparation of electrolytic composition

Electrolytic compositions E-1 to E-19 shown in Table 1 below were prepared. The structures of compounds used for the electrolytic compositions are shown below.

**Table 1**

| Sample of Electrolyte Comp.* | Composition (% by mass) | | |
|---|---|---|---|
| | Electrolyte | Gelating Agent | Fine, Inorganic Particles |
| E-1 | Y-b (15) / I₂ (5) / acetonitrile (80) | - | - |
| E-2 | Y-b (60) / Y-c (35) / I₂ (5) | - | - |
| E-3 | Y-b (15) / I₂ (5) / acetonitrile (70) | P-1 (5) / A-1 (5) | - |
| E-4 | Y-b (60) / Y-c (30) / I₂ (5) | P-1 (5) / A-1 (5) | - |
| E-5 | Nal (15) / I₂ (5) / acetonitrile (75) | - | SiO₂*^{a}* (5) |
| E-6 | Y-b (60) / Y-c (30) / I₂ (5) | - | SiO₂*^{a}* (5) |
| E-7 | Y-b (60) / Y-c (30) / I₂ (5) | - | SᵢO₂*^{b}* (5) |
| E-8 | Y-b (60) / Y-c (30) / I₂ (5) | - | SiO₂*^{c}* (5) |
| E-9 | Y-b (60) / Y-c (30) / I₂ (5) | - | TiO₂*^{d}* (5) |
| E-10 | Y-b (60) / Y-c (30) / I₂ (5) | - | Al₂O₃*^{e}* (5) |
| E-11 | Y-b (60) / Y-c (27.5) / I₂ (5) | P-1 (2.5) | SiO₂*^{a}* (5) |
| E-12 | Y-b (60) / Y-c (27.5) / I₂ (5) | P-3 (2.5) | SiO₂*^{a}* (5) |
| E-13 | Y-b (60) / Y-c (25) / I₂ (5) | P-1 (2.5) / A-1 (2.5) | SiO₂*^{a}* (5) |
| E-14 | Y-b (60) / Y-c (25) / I₂ (5) | P-2 (2.5) / A-2 (2.5) | SiO₂*^{a}* (5) |
| E-15 | Y-b (60) / Y-c (25) / I₂ (5) | P-3 (2.5) / A-3 (2.5) | SiO₂*^{a}* (5) |
| E-16 | Y-b (60) / Y-c (25) / I₂ (5) | GE-1 (5) | SiO₂*^{a}* (5) |
| E-17 | Y-b (60) / Y-c (25) / I₂ (5) | GE-2 (5) | SiO₂*^{a}* (5) |
| E-18 | Y-b (60) / Y-c (25) / I₂ (5) | P-1 (2.5) / A-1 (2.5) | TiO₂*^{d}* (5) |
| E-19 | Y-b (60) / Y-c (25) / I₂ (5) | P-1 (2.5) /A-1 (2.5) | Al₂O₃*^{e}* (5) |

| | | | |
|---|---|---|---|
| Note: * Samples E-1 to E-5 are Comparative Examples, and Samples E-6 to E-19 are Examples of the present invention. *a*: Colloidal silica "AEROSIL 200" having an average particle diameter of about 12 nm available from Nippon Aerosil Co., Ltd. *b*: Colloidal silica "AEROSIL RX200" having an average particle diameter of about 12 nm available from Nippon Aerosil Co., Ltd. *c*: Colloidal silica "AEROSIL 30" having an average particle diameter of about 30 nm available from Nippon Aerosil Co., Ltd. *d:* titanium dioxide "T805 200" having an average particle diameter of about 21 nm available from Nippon Aerosil Co., Ltd. *e*: aluminum oxide having an average particle diameter of about 13 nm available from Nippon Aerosil Co., Ltd. | | | |

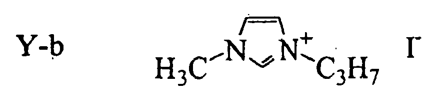

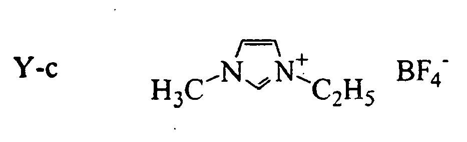

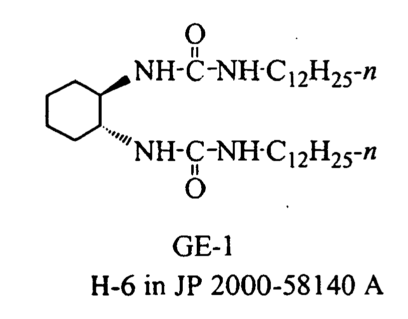

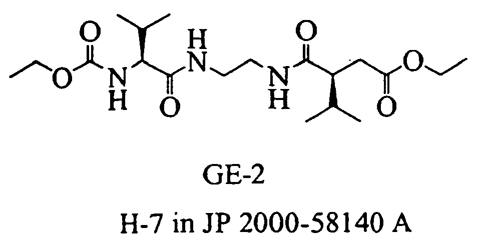

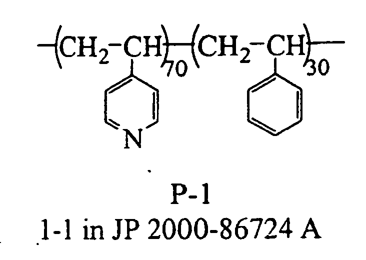

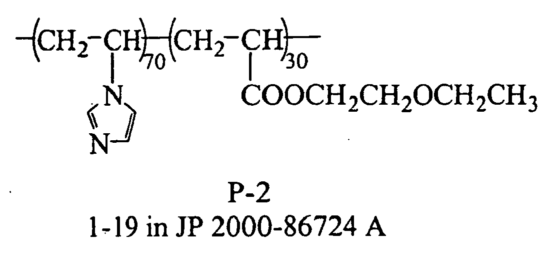

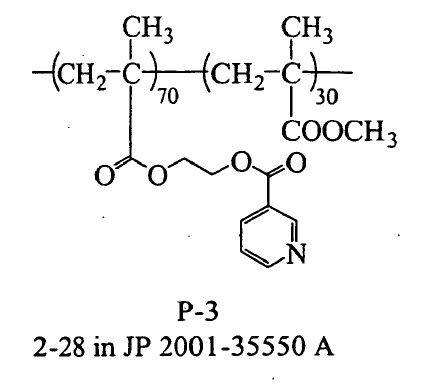

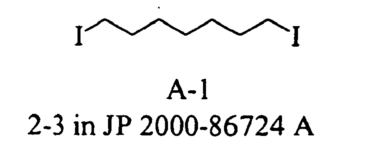

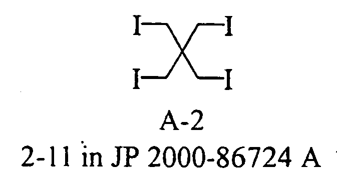

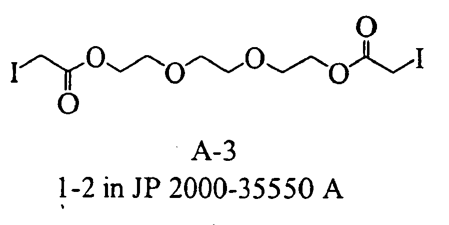

### 4. Production of photoelectric conversion device

Using the above dye-adsorbed titanium dioxide electrode and electrolytic compositions E-1 to E-19, photoelectric conversion devices C-1 to C-19 were prepared. Incidentally, each step in the production of the photoelectric conversion devices was carried out in a dry air having a dew point of -60°C as long as possible.

A platinum-vapor-deposited glass plate 90 (counter electrode) of 2 cm × 1.5 cm, to which a spacer 82 shown in Fig. 11(b) was attached, was pressure-bonded to the above dye-adsorbed titanium dioxide electrode as shown in Fig. 11(c). Incidentally, a heat-shrinkable resin sheet "FUSABOND" available from Du Pont having a thickness of 25 µm was used as a spacer 82, and pressure-bonding was carried out by applying a mechanical pressure in a thickness direction while heating at 130°C for 20 seconds to fuse the spacer 82. The above electrolytic composition E-1 was caused to penetrate into a gap between both electrodes through a spacer opening 83, and their peripheries were sealed with an epoxy adhesive except for the outermost peripheries of terminals, to prepare the photoelectric conversion device C-1 of Comparative Example.

After a platinum-vapor-deposited glass plate 90 was pressure-bonded to the dye-adsorbed titanium dioxide electrode as in the case of the above photoelectric conversion device C-1, the above electrolytic composition E-2 was charged into a gap between both electrodes through a spacer opening 83 at 50°C, so that a space between both electrodes was filled with an electrolyte. The resultant assembly was evacuated in vacuum for several hours, and its peripheries were sealed by an epoxy adhesive except for the outermost peripheries of terminals, to prepare a comparative photoelectric conversion device C-2. In addition, a comparative photoelectric conversion device C-5 was prepared by the same method except for using an electrolytic composition E-5 in place of an electrolytic composition E-2.

A comparative photoelectric conversion device C-3 was prepared in the same manner as in the production of the above photoelectric conversion device C-1, except for using an electrolytic composition E-3 in place of the electrolytic composition E-1, and gelating the electrolytic composition by heating at 80°C for 5 hours after sealing with an epoxy adhesive.

A comparative photoelectric conversion device C-4 was prepared in the same manner as in the production of the above photoelectric conversion device C-2, except for using an electrolytic composition E-4 in place of the electrolytic composition E-2, and gelating the electrolytic composition at 80°C for 5 hours after sealing with an epoxy adhesive.

A spacer 82 of a heat-shrinkable resin sheet "FUSABOND" available from Du Pont having a thickness of 25 µm was attached to each of the above dye-adsorbed titanium dioxide electrodes of 2 cm × 1.5 cm in a periphery of a titanium dioxide layer 81 as shown in Fig. 12. Next, 6 µL of a solution obtained by diluting the electrolytic composition E-6 three times with a mixed solvent of acetonitrile and THF at an acetonitrile/THF volume ratio of 1 to 1 was applied to the titanium dioxide layer 81, which was left to stand for 3 hours in vacuum to remove the solvent. After repeating three times the application of the solution and the removal of the solvent, a platinum-vapor-deposited glass substrate was stacked on the spacer 82. Their peripheries were sealed with an epoxy adhesive except for the outermost peripheries of terminals, and they were heated at 80°C for 5 hours to prepare the photoelectric conversion device C-6 of the present invention. This photoelectric conversion device had a laminated structure comprising the conductive glass plate 1 having a conductive layer 3 on a glass plate 2, a dye-adsorbed titanium dioxide layer 4, a charge transfer layer 5, a platinum layer 6 and a glass plate 7 in this order, as shown in Fig. 10.

The photoelectric conversion devices C-7 to C-19 of the present invention were prepared in the same manner as in the production of the above photoelectric conversion device C-6 except for using any one of electrolytic compositions E-7 to E-19 in place of the electrolytic composition E-6.

### 5. Evaluation of photoelectric conversion efficiency and durability

A simulated sunlight was obtained by passing light of a 500-W xenon lamp available from USHIO INC. through an "AM 1.5 filter" available from Oriel. The simulated sunlight had the intensity of 100 mW/cm² in a vertical plane. A silver paste was applied to an edge of an electrically conductive glass plate in each of the photoelectric conversion devices C-1 to C-19 to form a negative electrode, and the negative electrode and a counter electrode as a positive electrode were connected to a current-voltage tester "Keithley SMU238." While vertically irradiating the simulated sunlight to each photoelectric conversion device, its current-voltage characteristics were measured to determine its photoelectric conversion efficiency. The data of each photoelectric conversion device with respect to a short-circuiting current density, an open-circuit voltage, a shape factor, a photoelectric conversion efficiency and a decrease ratio of the short-circuiting current density after 360-hour storage at 30°C are shown in Table 2.

**Table 2**

| Sample of Photoelectric Conversion Device | Electrolytic Composition | Short-Circuiting Current Density (mA/cm²) | Open Voltage (V) |
|---|---|---|---|
| C-1 | E-1 | 8.8 | 0.65 |
| C-2 | E-2 | 7.5 | 0.62 |
| C-3 | E-3 | 8.1 | 0.64 |
| C-4 | E-4 | 5.8 | 0.62 |
| C-5 | E-5 | 8.5 | 0.64 |
| C-6 | E-6 | 7.6 | 0.62 |
| C-7 | E-7 | 7.9 | 0.63 |
| C-8 | E-8 | 7.4 | 0.63 |
| C-9 | E-9 | 7.7 | 0.65 |
| C-10 | E-10 | 7.8 | 0.62 |
| C-11 | E-11 | 7.3 | 0.63 |
| C-12 | E-12 | 7.4 | 0.64 |
| C-13 | E-13 | 7.4 | 0.63 |
| C-14 | E-14 | 7.2 | 0.63 |
| C-15 | E-15 | 7.6 | 0.62 |
| C-16 | E-16 | 7.0 | 0.63 |
| C-17 | E-17 | 7.1 | 0.62 |
| C-18 | E-18 | 7.1 | 0.64 |
| C-19 | E-19 | 7.3 | 0.62 |
| C-1 | 0.65 | 3.7 | 95 |
| C-2 | 0.64 | 3.0 | 15 |
| C-3 | 0.6 | 3.1 | 90 |
| C-4 | 0.59 | 2.1 | 18 |
| C-5 | 0.65 | 3.5 | 88 |
| C-6 | 0.67 | 3.2 | 8 |
| C-7 | 0.68 | 3.4 | 7 |
| C-8 | 0.67 | 3.1 | 7 |
| C-9 | 0.65 | 3.3 | 8 |
| C-10 | 0.66 | 3.2 | 8 |
| C-11 | 0.65 | 3.0 | 4 |
| C-12 | 0.64 | 3.0 | 3 |
| C-13 | 0.67 | 3.1 | 5 |
| C-14 | 0.64 | 2.9 | 4 |
| C-15 | 0.68 | 3.2 | 6 |
| C-16 | 0.69 | 3.0 | 5 |
| C-17 | 0.69 | 3.0 | 5 |
| C-18 | 0.69 | 3.1 | 6 |
| C-19 | 0.69 | 3.1 | 5 |

| | | | |
|---|---|---|---|
| Note: * The decrease ratio of short-circuiting current density was calculated by the equation of (short-circuiting current density immediately after leaving the device to stand at 30°C for 360 hours / short-circuiting current density immediately after the production of the device) × 100 (%). | | | |

As is clear from Table 2, the photoelectric conversion devices of the present invention exhibited excellent durability while keeping as high photoelectric conversion efficiency as that of the comparative photoelectric conversion devices.

As described above in detail, the electrolytic gel composition of the present invention exhibits excellent charge transportability even in a state where there is substantially no flowability. The photoelectric conversion device comprising this electrolytic gel composition exhibits excellent photoelectric conversion and durability.

## Claims

1. An electrolytic gel composition comprising a molten-at-room-temperature salt and fine, inorganic particles being 1 to 10% by mass based on the entire eletrolytic compositions, wherein the fine, inorganic particles are selected from the group consisting of oxides of titanium, tin, zinc, iron, tungsten, zirconium, hafnium, strontium, indium, cerium, yttrium, lanthanum, vanadium, niobium, tantalum, aluminum, silicon, boron, phosphorus and magnesium, the minimum unit of said particles that are not physically agglomerated having an average particle diameter of 1nm to 300 nm.

2. The electrolytic gel composition of claim 1, further comprising an Iodine (I₂) redox couple.

3. The electrolyte gel composition of claim 1 or 2, wherein an amount of said fine inorganic particles is 5% by mass or less based on the entire electrolyte composition.

4. A photoelectric conversion device comprising a conductive support, a photosensitive layer, a charge transfer layer and a counter electrode, said charge transfer layer comprising said electrolytic gel composition recited in any one of claims 1 to 3.

5. A photoelectric cell comprising said photoelectric conversion device recited in claim 4.

## Patentansprüche

1. Elektrolytgelzusammensetzung, umfassend ein bei Raumtemperatur geschmolzenes Salz und feine, anorganische Teilchen in einer Menge von 1 bis 10 Masse-%, bezogen auf die gesamte Elektrolytzusammensetzung, wobei die feinen, anorganischen Teilchen aus der Gruppe bestehend aus Oxiden von Titan, Zinn, Zink, Eisen, Wolfram, Zirkonium, Hafnium, Strontium, Indium, Cer, Yttrium, Lanthan, Vanadium, Niob, Tantal, Aluminium, Silicium, Bor, Phosphor und Magnesium ausgewählt sind und die kleinste Einheit der Teilchen, die nicht physikalisch agglomeriert sind, einen mittleren Teilchendurchmesser von 1 nm bis 300 nm aufweist.

2. Elektrolytgelzusammensetzung nach Anspruch 1, ferner umfassend ein Iod-Redoxpaar (I₂-Redoxpaar).

3. Elektrolytgelzusammensetzung nach Anspruch 1 oder 2, in der die Menge der feinen, anorganischen Teilchen 5 Masse-% oder weniger, bezogen auf die gesamte Elektrolytzusammensetzung, beträgt.

4. photoelektrische Umwandlungsvorrichtung mit einem leitfähigen Träger, einer lichtempfindlichen Schicht, einer Ladungstransportschicht und einer Gegenelektrode, wobei die Ladungstransportschicht die Elektrolytgelzusammensetzung gemäß einem der Ansprüche 1 bis 3 umfaßt.

5. Photoelektrische Zelle, umfassend die photoelektrische Umwandlungsvorrichtung gemäß Anspruch 4.

## Revendications

1. Composition de gel électrolytique comportant un sel fondu à température ambiante et des particules inorganiques fines représentant 1 à 10% en masse par rapport à la composition électrolytique entière, les particules inorganiques fines étant sélectionnées dans le groupe comprenant les oxydes de titane, d'étain, de zinc, de fer, de tungstène, de zirconium, de hafnium, de strontium, d'indium, de cérium, d'yttrium, de lanthane, de vanadium, de niobium, de tantale, d'aluminium, de silicium, de bore, de phosphore et de magnésium, l'unité minimale desdites particules n'étant pas physiquement agglomérées présentant un diamètre moyen de particule de 1 nm à 300 nm.

2. Composition de gel électrolytique selon la revendication 1, comportant en outre un couple rédox à base d' iode (I₂).

3. Composition de gel électrolytique selon la revendication 1 ou 2, une certaine quantité desdites particules inorganiques fines représentant 5% en masse ou moins par rapport à la composition électrolytique entière.

4. Dispositif de conversion photoélectrique comportant un support conducteur, une couche photosensible, une couche de transfert de charges et une contre-électrode, ladite couche de transfert de charges comportant ladite composition de gel électrolytique exposée dans l'une quelconque des revendications 1 à 3.

5. Cellule photoélectrique comportant ledit dispositif de conversion photoélectrique exposé dans la revendication 4.
